# EUROPÄISCHE PATENTANMELDUNG

(11) **EP 2 165 979 A1**
(43) Veröffentlichungstag der Anmeldung: **24.03.2010**
(21) Anmeldenummer: 09011872.0
(22) Anmeldetag: 17.09.2009
(51) Int. Cl.: C02F 1/32, C02F 1/78, C01B 13/10, C02F 9/00

(54) **Ozon-Generator zur chemischen Desinfektion von Wasser und Verfahren zum Nachrüsten einer Anlage zur physikalischen Desinfektion von Wasser**

(30) Priorität: 19.09.2008 DE 102008048063
(71) Anmelder: SOL-UV Technologie & Entwicklungs-GmbH, 5023 Salzburg (AT)
(72) Erfinder: Polak, Walter, 5020 Salzburg (AT)
(74) Vertreter: Hagemann, Heinrich

(57) **Zusammenfassung**

Die Erfindung betrifft einen Ozon-Generator (1) zur Erzeugung von Ozon (O) durch Ozonierung eines Fluids (L) mittels einer ersten UV-Strahlung für die chemische Desinfektion von Wasser, aufweisend einen Behälter (2) zum Hindurchleiten des Fluids (L), wenigstens eine erste UV-Strahlungsquelle (3) zum Erzeugen wenigstens einer ersten UV-Strahlung für die Ozonierung des Fluids (L) in dem Behälter (2) und ein Eintragsmittel (5) zum Eintrag des in dem Behälter (2) ozonierten Fluids (L+O) in das aufzubereitende Wasser (W) für die chemische Desinfektion, wobei die Innenwand des Behälters (2) als Reflektor (4) zum Reflektieren der erzeugten UV-Strahlung ausgebildet ist und wobei die oder jede erste UV-Strahlungsquelle (3) im Bereich einer ersten Symmetrieachse des Behälters (2) vorgesehen ist und die Innenwand des ersten Behälters (2) mit einer gewellten Oberfläche zur Erhöhung der Intensität der reflektierten UV-Strahlung in dem Bereich zwischen der ersten Symmetrieachse und der Innenwand des ersten Behälters (2) ausgebildet ist. Weiterhin betrifft die Erfindung ein Verfahren zum Nachrüsten einer Anlage zur physikalischen Desinfektion von Wasser, insbesondere einer UV-Anlage, mit dem erfindungsgemäßen Ozon-Generator zur zusätzlichen chemischen Desinfektion des Wassers. Die Erfindung ermöglicht eine Wirkungsgradverbesserung bei der Ozonerzeugung und bei der chemischen Desinfektion sowie deren Steuerung im Rahmen der Wasseraufbereitung ohne höheren Energieaufwand sowie insgesamt eine verbesserte Umweltverträglichkeit und Wirtschaftlichkeit der chemischen Aufbereitung von Wasser mittels UV-Strahlung ohne Qualitätsverminderung des aufbereiteten Wassers.

## Beschreibung

Die Erfindung betrifft einen Ozon-Generator zum gesteuerten Bereitstellen von Ozon für die chemische Desinfektion von Wasser gemäß dem Oberbegriff des Anspruchs 1. Weiterhin betrifft die Erfindung ein Verfahren zum Nachrüsten einer Anlage zur physikalischen Desinfektion von Wasser, insbesondere eine UV-Anlage, gemäß dem Oberbegriff des Anspruchs 12 mit dem erfindungsgemäßen Ozon-Generator zur zusätzlichen chemischen Desinfektion des Wassers.

Ziel der Wasseraufbereitung ist es, eine für den jeweiligen Verwendungszweck erforderliche Wasserqualität sicherzustellen und jedenfalls eine gesundheitliche Gefährdung von Mensch und Tier durch das aufbereitete Wasser zuverlässig auszuschließen. Die verschiedenen Wasserqualitäten werden durch mikrobiologische, chemische und physikalische Grenzwerte definiert und sind Gegenstand einschlägiger Verordnungen und technischer Regelwerke. Bei der Wasseraufbereitung ist damit insbesondere sicherzustellen, dass die Belastung des aufbereiteten Wassers durch Bakterien, Viren, Sporen und Pilze innerhalb der zulässigen Grenzen dauerhaft gewährleistet ist. Die hierzu angewandten Desinfektionsverfahren lassen sich prinzipiell in chemische und physikalische Verfahren unterteilen. Zur Wasseraufbereitung durch chemische Desinfektion zählt etwa die Chlorierung mit Chlor oder Chlordioxid sowie die Beimischung von Ozon. Als physikalische Desinfektionsverfahren werden das Erhitzen und die UV-Bestrahlung von Wasser bezeichnet.

Ozon (O₃) als hochreaktives Oxidationsmittel wird in der Regel erst unmittelbar vor der Beimischung zu dem aufzubereitenden Wasser vor Ort erzeugt, während Chlor oder Chlordioxid problemlos vorgehalten werden und bedarfsweise dem aufzubereitenden Wasser, beispielsweise in einer Bade- oder Schwimmbeckenanlage, zudosiert werden können. Durch Chlorierung aufbereitetes Wasser weist allerdings in der Regel den typischen Chlorgeruch ("Hallenbadgeruch") auf, der durch dabei entstehende Chloramine verursacht wird und als sensorischer Mangel empfunden wird. Zwar entwickelt auch Ozon bei höheren Konzentrationen einen ähnlichen Geruch. Da für die Wasseraufbereitung Ozon aber nur in geringen Konzentrationen erforderlich ist, ist die chemische Desinfektion mit Ozon völlig geruchlos.

Durch Ozon werden so pathogene Mikroorganismen und organische Spurenstoffe sowie die Präkursoren für Desinfektionsnebenprodukte (DNP, etwa Chloramine) und Trihalogenmethane (THM, etwa Chloroform) oxidativ eliminiert oder deaktiviert. Insgesamt ist Ozon geeignet, eine vorhandene Belastung des aufzubereitenden Wassers durch Bakterien, Viren, Sporen und Pilze zu bekämpfen. Zum Zwecke der Wasseraufbereitung werden die zur chemischen Desinfektion vorgesehenen Wirkstoffe über Eintragsmittel in das aufzubereitende Wasser eingebracht und mit diesem in geeigneten Mischvorrichtungen möglichst gleichmäßig vermischt.

Demgegenüber beruht die physikalische Desinfektion von Wasser mittels UV-Strahlung auf einer Spaltung organischer Bindungen und insoweit auf einer unmittelbaren Schädigung der Zellstruktur bzw. DNS und damit auf einer Inaktivierung aller im aufzubereitenden Wasser enthaltenen Mikroorganismen bzw. organischen Stoffe. Damit erfasst die UV-Desinfektion beispielsweise auch pathogene Keime, die gegen spezifische Desinfektionsmittel wie Chlor resistent sind. Ebenso werden Präkursoren eliminiert oder deaktiviert. Durch UV-Strahlung behandeltes Wasser ist zudem sensorisch einwandfrei und weist insoweit keinerlei geruchliche oder geschmackliche Beeinträchtigung auf.

Bei der physikalischen Desinfektion von Wasser mittels UV-Strahlung kommen Wellenlängen im Bereich von etwa 280 bis 100 nm zum Einsatz. Diese sogenannte UV-C-Strahlung wird beispielsweise mit Niederdruck-Quecksilberdampflampen erzeugt, deren Primärstrahlung bei 253,7 nm liegt. Die Wirksamkeit der UV-Desinfektion hängt somit einerseits von der jeweiligen Strahlungsenergie und andererseits von der Eindringtiefe dieser Strahlung in das aufzubereitende Wasser ab. Vorrichtungen zur physikalischen Desinfektion von Wasser mittels UV-Strahlung werden als UV-Reaktoren oder UV-Stufen bezeichnet.

Da UV-Strahlung einer Wellenlänge < 200 nm von molekularem Sauerstoff (O₂) unter Aufspaltung absorbiert wird, können UV-Strahlungsquellen auch für die Ozon-Erzeugung eingesetzt werden. Diese ionisierende Strahlung wird neben der Primärstrahlung als Sekundärstrahlung von den genannten UV-Strahlern erzeugt und kann durch Verwendung von Quarzglas als Lampenglas nutzbar gemacht werden. Bei einer ozonerzeugenden Lampe üblicher Bauart liegt der Anteil der emittierten ionisierenden Sekundärstrahlung von 185 nm bei etwa 10 %, während der Anteil der emittierten Primärstrahlung von 254 nm etwa 90 % beträgt. Wird also ein Fluid, etwa Luft, zur Ozonierung einer derartigen UV-Strahlungsquelle ausgesetzt, erfolgt einerseits eine teilweise Umwandlung des enthaltenen Sauerstoffs in Ozon und andererseits eine physikalische Desinfektion des restlichen Fluids, wie sie vorstehend im Zusammenhang mit Wasser angegeben ist. Die für die Ozonierung eines geeigneten Fluids verwendete Vorrichtung wird als Ozon-Generator bzw. Ozon-Stufe bezeichnet.

Aus dem Stand der Technik sind Verfahren und Vorrichtungen der genannten Art bekannt. Insbesondere ist es aus dem Stand der Technik auch bekannt, Vorrichtungen zur chemischen Desinfektion mit solchen zur physikalischen Desinfektion für die Wasseraufbereitung zu kombinieren. Eine derartige Vorrichtung ist beispielsweise in der DE-A1-198 32 431 offenbart. Danach sind in einem Behälter ein Quarzglasrohr zum Durchströmen mit dem aufzubereitenden Wasser und ein UV-Strahler zur Erzeugung einer bispektralen UV-Strahlung von 254,7 nm für eine physikalische Desinfektion des Wassers in dem Quarzglasrohr und von < 200 nm für eine Ozonerzeugung aus gefilterter Luft in dem Bereich zwischen der Behälterinnenwand und dem Quarzglasrohr angeordnet. Der Ozonerzeugungsbereich des Behälters ist für eine chemische Desinfektion über ein mit einem Rückschlagventil versehenes Verbindungsrohr mit dem wasserführenden Bereich innerhalb des Quarzglasrohrs in baulicher Einheit verbunden. Dabei wird durch einen in dem Ozonerzeugungsbereich relativ zum wasserführenden Bereich innerhalb des Quarzglasrohres höheren Druck und das Verbindungsrohr mit Rückschlagventil zwischen den beiden Bereichen sichergestellt, dass das erzeugte Ozon-Luftgemisch in das aufzubereitende Wasser einbringbar ist, ohne dass Wasser aus dem Quarzglasrohr in den Ozonerzeugungsbereich eindringen kann. Mittels eines dem Quarzglasrohr in Strömungsrichtung nachgeordneten Gasabscheiders, der mit einem Aktivkohlefilter verbunden ist, wird zudem gewährleistet, dass überschüssiges Ozon neutralisiert wird. Zwar ist es mit dieser Vorrichtung möglich, Ozon zur chemischen Desinfektion von Wasser bereitzustellen. Allerdings ist bei dieser Verfahrens- bzw. Vorrichtungskombination weder eine bedarfsgerechte Erzeugung von Ozon noch eine optimale chemische Desinfektion im Hinblick auf Wirkungsgrad, Energieeinsatz und Wirtschaftlichkeit angestrebt noch möglich.

Demgegenüber offenbart die EP-B1-1 340 718 eine Vorrichtung zur kombinierten physikalischen und chemischen Desinfektion von Wasser, die, bei prinzipiell ähnlichem Aufbau wie er in der DE-A1-198 32 431 beschrieben ist, sowohl eine Verbesserung der Ozonausbeute als auch der chemischen Desinfektion des aufzubereitenden Wassers mit Ozon ermöglicht. Diese Verbesserungen werden im Einzelnen durch eine reflektierende Ausbildung der inneren Behälterwand aus Aluminium zur Erhöhung der Strahlungsintensität im Ozonerzeugungsbereich - sowie gleichzeitig im Quarzglasrohr - innerhalb des Behälters und durch die Verwendung eines separaten Ozonmischers in Strömungsrichtung zwischen dem Ozonerzeugungsbereich des Behälters bzw. dem Ozon-Generator und der Auslassleitung des Quarzglasrohres bzw. dem UV-Reaktor ermöglicht. Zwar ist nach diesem Stand der Technik in der Leitung zwischen dem Ozonerzeugungsbereich des Behälters und dem Ozonmischer auch ein sogenannter Ozonregler vorgesehen, dessen Funktion allerdings nicht weiter erläutert wird. Jedenfalls erübrigt sich durch diesen Ozonregler nicht die Notwendigkeit das aus der unter Überdruck dem Ozonerzeugungsbereich des Behälters zugeführten Luft gewonnene überschüssige Ozon bzw. Restozon über einen Gasentlüfter zu neutralisieren. Die angegebenen Maßnahmen eignen sich insoweit zwar den Wirkungsgrad der chemischen Desinfektion bei der Wasseraufbereitung zu verbessern. Eine umweltschonende, energie- und kostensparende Aufbereitung von Wasser mit hoher Qualität durch chemische Desinfektion mit UV-Strahlung bei gleichzeitiger Wirkungsgradverbessung und unter Vermeidung von unerwünschtem Restozon ist jedoch damit nicht möglich.

Der Erfindung liegt die Aufgabe zugrunde, einen Ozon-Generator zur Erzeugung von Ozon durch Ozonierung eines Fluids mittels UV-Strahlung für die chemische Desinfektion von Wasser anzugeben, bei dem die genannten Nachteile des Standes der Technik überwunden werden. Insbesondere besteht diese Aufgabe somit darin, einen Ozon-Generator anzugeben, der eine weitere Wirkungsgradverbesserung bei der Ozonerzeugung und bei der chemischen Desinfektion des aufzubereitenden Wassers ohne höheren Energieaufwand ermöglicht, bei gleichzeitiger Steuerbarkeit der chemischen Desinfektion, um einerseits unmittelbar auf eine Veränderung der Wasserqualität, etwa infolge einer höheren Frequentierung einer Bade- oder Schwimmbeckenanlage, reagieren zu können und um andererseits eine aufwändige Entsorgung von Restozon zu vermeiden oder, mit anderen Worten, insgesamt die Umweltverträglichkeit und Wirtschaftlichkeit der chemischen Aufbereitung von Wasser mittels UV-Strahlung ohne Qualitätsverminderung des aufbereiteten Wassers zu verbessern. Weiterhin ist es Teil der Aufgabe der Erfindung ein Verfahren zum Nachrüsten einer bestehenden Anlage zur physikalischen Desinfektion von Wasser, insbesondere einer UV-Anlage, mit dem erfindungsgemäßen Ozon-Generator zur zusätzlichen chemischen Desinfektion des Wassers anzugeben.

Diese Aufgabe wird durch einen Ozon-Generator zur Erzeugung von Ozon durch Ozonierung eines Fluids mittels einer ersten UV-Strahlung für die chemische Desinfektion von Wasser, aufweisend einen Behälter zum Hindurchleiten des Fluids, wenigstens eine erste UV-Strahlungsquelle zum Erzeugen wenigstens einer ersten UV-Strahlung für die Ozonierung des Fluids in dem Behälter und ein Eintragsmittel zum Eintrag des in dem Behälter ozonierten Fluids in das aufzubereitende Wasser für die chemische Desinfektion, wobei die Innenwand des Behälters als Reflektor zum Reflektieren der erzeugten UV-Strahlung ausgebildet ist, dadurch gelöst, dass die oder jede erste UV-Strahlungsquelle im Bereich einer ersten Symmetrieachse des Behälters vorgesehen ist und die Innenwand des ersten Behälters mit einer gewellten Oberfläche zur Erhöhung der Intensität der reflektierten UV-Strahlung in dem Bereich zwischen der ersten Symmetrieachse und der Innenwand des ersten Behälters ausgebildet ist.

Lösungsbestandteil der Aufgabe der Erfindung ist auch ein Verfahren zum Nachrüsten einer Anlage zur Aufbereitung von Wasser, aufweisend in fluidmechanischer Verbindung eine zweite Leitung zum Bereitstellen des aufzubereitenden Wassers, einen UV-Reaktor mit wenigstens einer zweiten Strahlungsquelle zur Erzeugung einer zweiten UV-Strahlung für die physikalische Desinfektion des bereitgestellten aufzubereitenden Wassers und eine zweite Ansteuereinheit zur Ansteuerung der oder jeder zweiten UV-Strahlungsquelle, eine dritte Leitung zum Ableiten des in dem UV-Reaktor physikalisch desinfizierten Wassers sowie ein Umwälzmittel in der zweiten oder dritten Leitung zum Erzeugen eines Wasserflusses durch die zweite Leitung, den UV-Reaktor und die dritte Leitung, das dadurch gekennzeichnet ist, dass ein erfindungsgemäßer Ozon-Generator mit einem Behälter zur Erzeugung von Ozon durch Ozonierung eines durch den Behälter hindurchgeleiteten Fluids mittels einer ersten UV-Strahlung und mit einem Eintragsmittel zum Eintrag des in dem Behälter ozonierten Fluids in das aufzubereitende Wasser fluidmechanisch mit der zweiten oder dritten Leitung in einer Weise gekoppelt wird, dass das in dem Behälter des Ozon-Generators ozonierte Fluid über das Eintragsmittel des Ozon-Generators gesteuert in den Wasserfluss für die chemische Desinfektion des aufzubereitenden Wassers eingetragen wird.

Durch die erfindungsgemäße Ausbildung des Ozon-Generators wird zum einen der Wirkungsgrad der Ozonerzeugung wesentlich gesteigert und zum anderen die Ozonerzeugung steuerbar. Beim Einsatz des Ozon-Generators in einer Anlage zur Aufbereitung von Wasser ist es somit möglich, auf wechselnde Qualitäten des aufzubereitenden Wassers unmittelbar durch Anpassung der erforderlichen Ozonmenge zu reagieren und insoweit eine Überproduktion von Ozon zu vermeiden, wodurch auch die nach dem Stand der Technik erforderlichen Filtermittel zur Neutralisation des Restozons wegfallen.

Nach dem Stand der Technik ist der Wirkungsgrad bei der Ozonerzeugung sehr gering. So beträgt er etwa lediglich 5 % bei der sogenannten stillen Entladung, der Erzeugung von Ozon durch Dissoziation von Sauerstoff mittels Hochspannung. Zwar ist durch die bekannte Ozonierung mittels UV-Strahlung demgegenüber eine Wirkungsgradverbesserung zu erzielen, die jedoch einerseits einem höheren Energieaufwand geschuldet ist und anderseits jedenfalls nicht gezielt steuerbar ist. Nach der Erfindung wird die Wirkungsgradverbesserung durch eine spezifische Vergrößerung und Ausbildung der Reflektorfläche innerhalb des Ozon-Generators ermöglicht. Durch die Wellenform der Reflektorfläche und deren im Wesentlichen konzentrische Ausbildung um die Strahlungsquelle herum wird die gesamte von der UV-Strahlungsquelle erzeugte Strahlung in definierter Weise in den Bereich zwischen Reflektor und Strahlungsquelle gelenkt, in dem wiederum die Ozonierung erfolgt. Demgegenüber ist die Reflektorfläche nach dem Stand der Technik eben bzw. in der Form einer glatten inneren Zylindermantelfläche ausgebildet, was in jedem Fall eine Totalreflexion einer von einer relativ dazu zentrisch angeordneten UV-Strahlungsquelle ausgehenden Strahlung zur Folge hat und eben nicht eine Maximierung der Strahlungsintensität in dem Bereich, in dem die Ozonierung erfolgt. Die Strahlungsintensität innerhalb dieses Bereichs wird erfindungsgemäß zusätzlich durch eine geeignete Materialauswahl für den Reflektor bzw. die Reflektorfläche sowie eine geeignet Wahl der Oberflächenrauigkeit erhöht.

Wie Versuche zeigten, ist es durch die gewellte Ausbildung der Reflektorfläche und deren damit bewirkte Vergrößerung möglich, mit einer 100 W-UV-Lampe eine Strahlungsintensität im Ozonierungsbereich des erfindungsgemäß ausgebildeten Ozon-Generators zu erzielen, die der einer 200 W-UV-Lampe in einem entsprechenden Ozon-Generator mit konventioneller bzw. ebener Reflektorfläche entspricht. Somit wird durch die erfindungsgemäße Ausgestaltung des Reflektors eine energiesparende und kostengünstige bzw. ökonomische Erzeugung von Ozon mit hohem Wirkungsgrad ermöglicht.

Als nachrüstbare Ozon-Stufe ist der Ozon-Generator zum Zusammenwirken mit allen bestehenden UV-Anlagen bzw. UV-Stufen für die Wasseraufbereitung sowohl in öffentlichen wie privaten Bade- und Schwimmbeckenanlagen geeignet. Entsprechend seiner Eignung zur Verwendung als Nachrüstkomponente in bestehenden Wasseraufbereitungssystemen ist der erfindungsgemäße Ozon-Generator gleichermaßen vorteilhaft im Rahmen von neu zu erstellenden Anlagen aller Art zur Wasseraufbereitung einsetzbar.

Vorteilhafte Weiterbildungen des erfindungsgemäßen Ozon-Generators sind in den abhängigen Ansprüche 2 bis 11 angegeben. Diese Weiterbildungen werden nachfolgend im Einzelnen unter Angabe der jeweiligen weiteren Vorteile sowie unter Einbeziehung der korrespondierenden vorteilhaften Ausführungsformen des erfindungsgemäßen Verfahrens zum Nachrüsten einer Anlage zur Aufbereitung von Wasser nach den abhängigen Ansprüchen 13 bis 14 näher erläutert:

Die für den Eintrag des in dem Ozon-Generator erzeugten Ozon-Fluid-Gemisches in das aufzubereitende Wasser vorgesehenen Eintragsmittel umfassen bevorzugt eine erste Leitung zum Herstellen einer fluidmechanischen Verbindung zwischen dem Behälter und dem aufzubereitenden Wasser in Verbindung mit einer steuerbaren Pumpe. Dabei ist besonders eine steuerbare Saug-Druckpumpe bevorzugt.

Alternativ und gleichermaßen bevorzugt ist als Eintragsmittel ein Venturi-Injektor vorgesehen. Der Venturi-Injektor umfasst ein als Venturi-Rohr bezeichnetes glattwandiges Rohrstück, das im Innern in der Form zweier einander gegenüberliegender Trichter verjüngt ist und das an der Stelle des geringsten Rohrdurchmessers mit einem im Wesentlichen normal dazu vorgesehenen sogenannten Abnahme- oder Venturi-Injektionsrohr fluidmechanisch verbunden ist. In bekannter Weise entsteht beim Fluiddurchtritt durch das Venturi-Rohr am Venturi-Injektionsrohr ein Differenzdruck, der zum Ansaugen des Ozon-Luftgemisches aus dem Ozon-Reaktor genutzt wird. Hierzu ist eine minimale Druckdifferenz von etwa 16 % ausreichend, um die gewünschte Funktion des Venturi-Injektors bzw. Venturi-Systems sicherzustellen.

Der Eintrag des in dem Ozon-Generator ozonierten Fluids in einen Wasserfluss oder Wasserkreislauf mit dem Venturi-Injektor ist über die Strömungsgeschwindigkeit des durch das Venturi-Rohr durchgeleiteten aufzubereitenden Wassers steuerbar. Darüber ist es von Vorteil, zusätzlich den Eintrag des ozonierten Fluids bzw. Ozon-Luftgemisches aus dem Ozon-Generator über ein in der fluidmechanischen Verbindung zwischen dem Behälterauslass des Ozon-Generators und dem Venturi-Injektionsrohr des Venturi-Injektors vorgesehenes Steuerventil zu steuern. Im Falle eines Betriebs des Ozon-Generators in einer geregelten Anlage zur Wasseraufbereitung kann das Steuerventil auch in die Regelung einbezogen sein. Mittels dieses Steuermittels, das beispielsweise in Form eines einfachen Kunststoffabsperrventils ausgebildet sein kann, ist es möglich, das durch den Ozon-Generator hindurchströmende Fluidvolumen zwischen 25 und 100 % zu steuern, was wiederum eine entsprechend exakte Steuerung der Ozon-Erzeugung ermöglicht.

Für die Anwendung des erfindungsgemäßen Ozon-Generators in einer Bade- und Schwimmbeckenanlage ergibt sich daraus der Vorteil, dass, wenn kein Badebetrieb herrscht, der Ozonanteil im Luft-Wasser-Gemisch erhöht werden kann, um so die Desinfektion zum Zwecke einer kurzfristigen Säuberung zu verstärken, so dass bei Wiederaufnahme des Badebetriebs die erforderliche Wasserqualität gewährleistet ist, ohne jegliche Beeinträchtigung, etwa geruchlicher Art, für die Badegäste.

Ein besonderer Vorteil des Venturi-Injektors ergibt sich insoweit dadurch, dass auch nach Abschalten der UV-Strahlungsquelle in dem Ozon-Generator der Venturi-Injektor weiterhin in Funktion bleibt, da er so lange Luft ansaugt wie das Venturi-Rohr von Wasser durchströmt wird. Durch den somit von der Ozonerzeugung unabhängigen Lufteintrag in das aufzubereitende Wasser wird eine zusätzliche Stripping-Funktion durch den erfindungsgemäßen Ozon-Generator bereitgestellt. So ist es beispielsweise in einer Bade- oder Schwimmanlage möglich, über Nacht, wenn kein Badebetrieb herrscht, auf die Ozon-Produktion zu verzichten, ohne gleichzeitig auch auf die physikalische Reduktion von Desinfektionsnebenprodukten verzichten zu müssen, die allein schon durch den Lufteintrag mittels des Venturi-Injektors durch Umwälzen des aufzubereitenden Wassers erfolgt. Das wiederum führt zu einer besonders wirtschaftlichen und kostengünstigen Verfahrensführung durch geringere Energiekosten und geringeren Wartungsaufwand beim Betrieb des Ozon-Generators, und zwar ohne jegliche Verminderung der Qualität des aufbereiteten Wassers.

Bevorzugt ist der von dem Ozon-Generator umfasste erste Behälter zylinderförmig mit einer Einlassöffnung an der ersten Stirnseite und einer Auslassöffnung an der zweiten Stirnseite für das Hindurchleiten des Fluids ausgebildet. Die wenigstens eine vorzusehende erste UV-Strahlungsquelle ist dabei vorteilhafterweise entlang der Zylinderlängsachse als erste Symmetrieachse des Behälters und insoweit zwischen dessen erster und zweiter Stirnseite angeordnet. Wenngleich die Zylinderform für den ersten Behälter bevorzugt ist, kann der erfindungsgemäße Ozon-Generator auch andere vorteilhafte symmetrische Behälterformen umfassen.

Jede von dem UV-Generator umfasste erste UV-Strahlungsquelle bzw. UV-Lampe ist zumindest zum Erzeugen der ersten UV-Strahlung mit einer Wellenlänge von etwa 100 bis 200 nm für die Ozonierung des ersten Fluids geeignet. Vorzugsweise emittiert jede dieser Strahlungsquellen einer UV-Strahlung von etwa 185 nm zum Zwecke der Ozonerzeugung. Um neben der Ozonierung des ersten Fluids auch dessen gleichzeitige physikalische Desinfektion zu ermöglichen, ist es bevorzugt, dass jede erste Strahlungsquelle zudem die zweite UV-Strahlung mit einer Wellenlänge von etwa 240 bis 280 nm, insbesondere mit etwa 254 nm, erzeugt. Grundsätzlich können hierfür alle konventionellen UV-Strahler mit entsprechendem Emissionsspektrum in vorteilhafter Weise eingesetzt werden. Bevorzugt ist jedoch die Verwendung von UV-Niederdruckstrahlern.

Die von der inneren Behälterwand des Ozon-Generators umfasste Reflexionsfläche ist durch die gewellte Ausbildung bevorzugt um etwa 50 bis 150 % gegenüber einer entsprechenden eben ausgebildeten Reflexionsfläche vergrößert, wodurch sich die Strahlungsintensität der reflektierten UV-Strahlung innerhalb des Ozonierungsbereichs des Ozon-Generators in überraschender Weise wesentlich erhöht. Dieser Ozonierungsbereich ist zwischen der ersten Symmetrieachse und der Innenwand des ersten Behälters ausgebildet und umfasst insoweit im Falle eines zylindrischen Behälters den Bereich zwischen der Zylinderlängsachse und der Zylindermantelfläche. Die gewellte Reflexionsfläche ist bevorzugt in Form von geraden Wellen mit gerundeten oder spitz zulaufenden Wellentälern und Wellenbergen ausgebildet, weist also das Muster von sich in einer bestimmten Richtung bewegenden langen, geraden und parallel ausgerichteten Wellen auf. Im Falle eines zylinderförmigen Behälters ist aus fertigungstechnischen Gründen eine parallele Ausrichtung dieses Wellenmuster zur Zylinderlängsachse besonders vorteilhaft. Gleichermaßen vorteilhaft im Hinblick auf eine Wirkungsgradsteigerung bei der Ozonierung ist selbstverständlich auch jede andere Ausrichtung dieses Wellenmusters in Bezug auf die erste Symmetrieachse des ersten Behälters.

Eine weitergehende Erhöhung der UV-Strahlungsintensität im Ozonierungsbereich des Ozon-Generators wird durch die Auswahl eines geeigneten Materials sowie einer geeigneten Oberflächengüte des Reflektors ermöglicht. Bevorzugt ist der Reflektor insoweit aus Aluminium mit glatter und insbesondere polierter Oberfläche gefertigt. Vorteilhaft kann beispielsweise auch eine erfindungsgemäß geformte Reflektorfläche aus aluminiumbeschichtetem Stahlblech (Alusil) eingesetzt werden. Bevorzugt ist es allerdings, die Reflexionsfläche entweder ganz aus Aluminium zu fertigen und diese nach Ausbildung der Wellenform zu polieren oder eine entsprechend gewellte Grundstruktur, etwa aus Kunststoff, mit Aluminium zu beschichten und diese Aluminiumschicht zu polieren. Durch diese Ausgestaltung der Reflexionsfläche können nahezu 100 % der von einer UV-Strahlungsquelle des Ozon-Generators erzeugten UV-Strahlung zur Ozonierung des Fluids beitragen, was gegenüber dem Stand der Technik eine wesentliche Wirkungsgradverbesserung darstellt. Der so ausgebildete Ozon-Generator weist zudem eine sehr gute Wärmeabstrahlung auf. Da bekanntermaßen die Ozonerzeugung mit zunehmender Temperatur innerhalb des Ozon-Generators abnimmt, ermöglicht die gute Wärmeabstrahlung des erfindungsgemäßen Ozon-Generators eine weitergehende Wirkungsgradsteigerung bei der Ozonerzeugung. Mit anderen Worten: für eine maximale Ozon-Produktion ist ein minimaler Energieaufwand erforderlich, was wiederum eine äußerst wirtschaftliche und umweltschonende Verfahrensführung ermöglicht.

Insbesondere bei Bade- und Schwimmanlagen ist es vorteilhaft, als Fluid für die Ozonierung in dem Ozon-Generator gefilterte Umgebungsluft zu verwenden. Dazu ist der Einlassöffnung des von dem Ozon-Generator umfassten ersten Behälters ein Luftfilter in fluidmechanischer Verbindung vorgeschaltet. Alternativ kann als Fluid für die Ozonierung reiner Sauerstoff eingesetzt werden.

Für ein weitergehendes Vermischen unter chemischem Desinfizieren des aufzubereitenden Wassers mit dem ozonierten Fluid ist in Strömungsrichtung zwischen dem Venturi-Injektor und dem UV-Reaktor vorzugsweise eine Mischvorrichtung vorgesehen. Überraschenderweise hat es sich gezeigt, dass Mischvorrichtungen mit einer wirksamen Reaktionsstrecke von wenigsten etwa 2,20 m, bevorzugt wenigstens etwa 2,30 m, eine besonders effektive chemische Desinfektion des aufzubereitenden Wassers ermöglichen. Mit wirksamer Reaktionsstrecke ist die freie Fließstrecke des aufzubereitenden Wassers zu verstehen, innerhalb der das damit vermischte Ozon seine oxidative Wirkung entfalten kann und die insoweit einer bevorzugten Einwirkdauer entspricht. Bevorzugt ist diese wirksame Reaktionsstrecke in Form einer Leitungsverlängerung bzw. eines Reaktionsrohres der genannten Länge in der zweiten oder dritten Leitung zwischen der Kopplungsstelle des Ozon-Generators und dem in Strömungsrichtung des aufzubereitenden Wassers jeweils gelegenen Leitungsende ausgebildet. Alternativ kann auch ein Reaktionsfass, das durch Umlenkmittel einen entsprechend langen Strömungspfad einschließt, eingesetzt werden. Die Mischvorrichtung stellt insoweit auch eine weitergehende Verwirbelung des ozonierten Fluids bzw. Ozon-Luftgemisches in dem aufzubereitenden Wasser in Ergänzung zu dem Venturi-Injektor sicher.

Durch die Verwendung konventioneller UV-Strahlungsquellen in dem erfindungsgemäßen Ozon-Generator können alle üblicherweise für den Betrieb von Ozon-Stufen oder UV-Stufen vorgesehenen Ansteuerungen als erste Ansteuereinheit zum Betrieb des Ozon-Generators verwendet werden. Vorteilhafterweise wird für die Ansteuerung jeder ersten UV-Strahlungsquelle in dem Ozon-Generator als erste Ansteuereinheit die bereits vorhandene zweite Ansteuereinheit des UV-Reaktors zur gemeinsamen Ansteuerung jeder ersten und jeder zweiten UV-Strahlungsquelle verwendet.

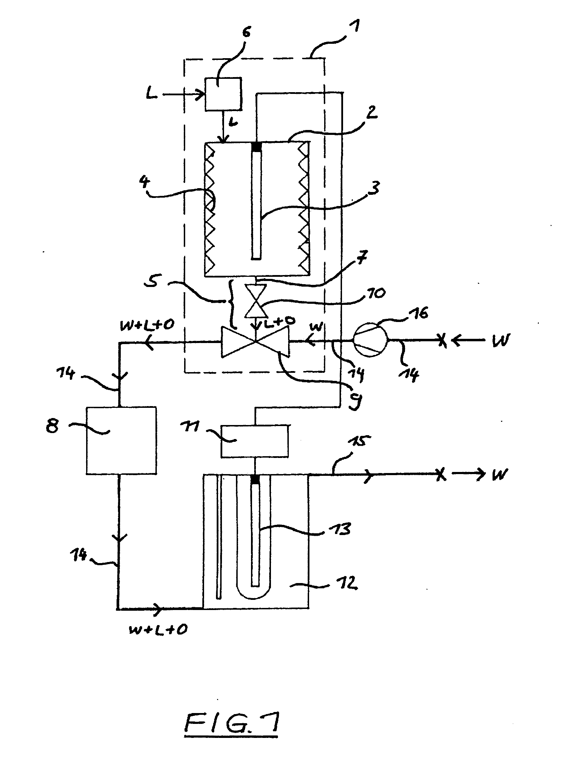

Eine bevorzugte Ausführung des erfindungsgemäßen Ozon-Generators ist in der beigefügten Figur 1 wiedergegeben:
- Fig. 1: zeigt in schematischer Darstellung einen Ozon-Generator zum gesteuerten Bereitstellen von Ozon für die chemische Desinfektion von Wasser in funktioneller Zuordnung zu einem UV-Reaktor zur physikalischen Desinfektion von Wasser unter Angabe der Strömungverläufe.

In Fig. 1 ist der erfindungsgemäße Ozon-Generator zum gesteuerten Bereitstellen von Ozon dargestellt, wie er im Rahmen einer Nachrüstung einer bestehenden Anlage zur physikalischen Desinfektion von Wasser für eine zusätzliche chemische Desinfektion des aufzubereitenden Wassers verbunden ist.

Zur Bereitstellung des aufzubereitenden Wassers (W) ist eine zweite Leitung (14) mit einem Umwälzmittel (16) vorgesehen, die mit dem Venturi-Rohr eines Venturi-Injektors (9) verbunden ist. Wird durch das Umwälzmittel (16) Wasser durch die zweite Leitung (14) in das Venturi-Rohr des Venturi-Injektors (9) gedrückt, entsteht in dem Venturi-Injektionsrohr des Venturi-Injektors (9) ein Unterdruck. Das Venturi-Rohr des Venturi-Injektors (9) ist über eine erste Leitung (7) mit dem Auslass des Behälters (2) des Ozon-Generators (1) verbunden, der wiederum über seinen Auslass mit einem Luftfilter (6) in Verbindung steht. Somit wird durch den Unterdruck in dem Venturi-Injektionsrohr des Venturi-Injektors (9) ein Einsaugen von Umgebungsluft in den Behälter (2) des Ozon-Generators (1) und ein Eintrag der in dem Behälter (2) des Ozon-Generators ozonierten Luft (L+O) in das das Venturi-Rohr des Venturi-Injektors (9) durchströmende Wasser (W) ermöglicht. Der von dem Ozon-Generator (1) umfasste Behälter (2) ist zylinderförmig mit einer Einlassöffnung an der ersten Stirnseite und einer Auslassöffnung an der zweiten Stirnseite für das Hindurchleiten der gefilterten Umgebungsluft (L) ausgebildet und weist eine erste UV-Strahlungsquelle (3), die sich zwischen der ersten und zweiten Stirnseite in einem Bereich entlang der Zylinderlängsachse erstreckt, zur Erzeugung einer bispektralen UV-Strahlung mit einer Wellenlänge von etwa 185 nm für die Bildung von Ozon (O) durch Ozonierung der eingesaugten gefilterten Umgebungsluft (L) und mit einer Wellenlänge von etwa 254 nm zur gleichzeitigen physikalischen Desinfektion der gefilterten Umgebungsluft (L) in dem Behälter (2) auf. Die Innenwand des Behälters (2) ist als Reflektor (4) zum Reflektieren der erzeugten UV-Strahlung mit einer gewellten Oberfläche aus poliertem Aluminium zur Erhöhung der Intensität der reflektierten UV-Strahlung in dem Bereich zwischen der Zylinderlängsachse und der Innenwand des Behälters (2) in orthogonaler Orientierung zu der Zylinderlängsachse ausgebildet. In der ersten Leitung (7) zwischen dem Behälter (2) des Ozon-Generators (1) und dem Venturi-Injektionsrohr des Venturi-Injektors (9) ist ein Steuerventil (10) in Form eines Kunststoffabsperrhahns vorgesehen, mit dem die Zufuhr der ozonierten Luft in das aufzubereitende Wasser zwischen 25 und 100 % einstellbar ist. Das Venturi-Rohr des Venturi-Injektors (9) ist weiter über die zweite Leitung (14) mit einer Mischvorrichtung (8) in Form eines Reaktionsfasses verbunden. Das Reaktionsfass weist eine wirksame Reaktionsstrecke von etwa 3 m auf, innerhalb der die chemische Desinfektion des Wassers (W) unter Einwirkung der ozonierten Luft (L+O) erfolgt. Der Auslass der Mischvorrichtung (8) ist weiter über die zweite Leitung (14) mit dem Einlass eines UV-Reaktors (12) verbunden. Dieser umfasst eine zweite UV-Strahlungsquelle (13). Die erste UV-Strahlungsquelle (3) in dem Ozon-Generator (1) und die zweite UV-Strahlungsquelle (13) in dem UV-Reaktor (12) sind zur gemeinsamen Ansteuerung elektrisch mit einer Ansteuereinheit (11) konventioneller Bauart verbunden. Der Auslass des UV-Reaktors (12) weist eine dritte Leitung (15) zum Bereitstellen des aufbereiteten Wassers auf.

### Bezugszeichenliste:

- 1: Ozon-Generator
- 2: Behälter
- 3: erste UV-Strahlungsquelle
- 4: UV-Reflektor
- 5: Eintragsmittel
- 6: Luftfilter
- 7: erste Leitung
- 8: Mischvorrichtung
- 9: Venturi-Injektor
- 10: Steuerventil
- 11: Ansteuereinheit
- 12: UV-Reaktor
- 13: zweite UV-Strahlungsquelle
- 14: zweite Leitung
- 15: dritte Leitung
- 16: Umwälzmittel
- W: Wasser
- L: Fluid
- O: Ozon

## Patentansprüche

1. Ozon-Generator (1) zur Erzeugung von Ozon (O) durch Ozonierung eines Fluids (L) mittels einer ersten UV-Strahlung für die chemische Desinfektion von Wasser, aufweisend einen Behälter (2) zum Hindurchleiten des Fluids (L), wenigstens eine erste UV-Strahlungsquelle (3) zum Erzeugen wenigstens einer ersten UV-Strahlung für die Ozonierung des Fluids (L) in dem Behälter (2) und ein Eintragsmittel (5) zum Eintrag des in dem Behälter (2) ozonierten Fluids (L+O) in das aufzubereitende Wasser (W) für die chemische Desinfektion, wobei die Innenwand des Behälters (2) als Reflektor (4) zum Reflektieren der erzeugten UV-Strahlung ausgebildet ist, **dadurch gekennzeichnet, dass** die oder jede erste UV-Strahlungsquelle (3) im Bereich einer ersten Symmetrieachse des Behälters (2) vorgesehen ist und die Innenwand des ersten Behälters (2) mit einer gewellten Oberfläche zur Erhöhung der Intensität der reflektierten UV-Strahlung in dem Bereich zwischen der ersten Symmetrieachse und der Innenwand des ersten Behälters (2) ausgebildet ist.

2. Ozon-Generator gemäß Anspruch 1, **dadurch gekennzeichnet, dass** das Eintragsmittel (5) eine erste Leitung (7) zum Herstellen einer fluidmechanischen Verbindung zwischen dem Behälter (2) und dem aufzubereitenden Wasser (W) sowie eine Pumpe, insbesondere eine Saug-Druckpumpe, zum gesteuerten Eintrag des ozonierten Fluids (L+O) über die erste Leitung (7) in das aufzubereitende Wasser (W) umfasst.

3. Ozon-Generator gemäß Anspruch 1, **dadurch gekennzeichnet, dass** das Eintragsmittel (5) eine erste Leitung (7) zum Herstellen einer fluidmechanischen Verbindung zwischen dem Behälter (2) und dem aufzubereitenden Wasser (W) sowie einen Venturi-Injektor (9) mit einem Venturi-Rohr zum Durchleiten des aufzubereitenden Wassers (W) und einem Venturi-Injektionsrohr zum gesteuerten Eintrag des ozonierten Fluids (L+O) in das durch das Venturi-Rohr durchgeleitete aufzubereitende Wasser (W) umfasst, wobei die erste Leitung (7) in fluidmechanischer Verbindung mit dem Venturi-Injektionsrohr ausgebildet ist und wobei der Eintrag des ozonierten Fluids (L+O) über die Strömungsgeschwindigkeit des durch das Venturi-Rohr durchgeleiteten aufzubereitenden Wassers (W) oder zusätzlich unmittelbar über ein in der ersten Leitung (7) zwischen dem Behälter (2) und dem Venturi-Injektionsrohr vorgesehenes Steuerventil (10) steuerbar ist.

4. Ozon-Generator gemäß mindestens einem der Ansprüche 1 bis 3, **dadurch gekennzeichnet, dass** der Behälter (2) zylinderförmig mit einer Einlassöffnung an der ersten Stirnseite und einer Auslassöffnung an der zweiten Stirnseite für das Hindurchleiten des Fluids (L) ausgebildet ist, wobei die erste Symmetrieachse des Behälters (2) die Zylinderlängsachse umfasst und wobei die oder jede erste UV-Strahlungsquelle (3) zwischen der ersten und zweiten Stirnseite in einem Bereich entlang der Zylinderlängsachse angeordnet ist.

5. Ozon-Generator gemäß mindestens einem der Ansprüche 1 bis 4, **dadurch gekennzeichnet, dass** die oder jede erste UV-Strahlungsquelle (3) zum Erzeugen der ersten UV-Strahlung mit einer Wellenlänge von etwa 100 bis 200 nm, insbesondere von etwa 185 nm, zur Ozonierung des ersten Fluids (L) vorgesehen ist.

6. Ozon-Generator gemäß mindestens einem der Ansprüche 1 bis 4, **dadurch gekennzeichnet, dass** die oder jede erste UV-Strahlungsquelle (3) zum Erzeugen der ersten UV-Strahlung mit einer Wellenlänge von etwa 100 bis 200 nm, insbesondere von etwa 185 nm, für die Ozonierung des ersten Fluids (L) oder zusätzlich zum Erzeugen der zweiten UV-Strahlung mit einer Wellenlänge von etwa 240 bis 280 nm, insbesondere von etwa 254 nm, für eine gleichzeitige physikalische Desinfektion des ersten Fluids (L) vorgesehen ist.

7. Ozon-Generator gemäß mindestens einem der Ansprüche 1 bis 7, **dadurch gekennzeichnet, dass** durch die gewellte Ausbildung die Oberfläche des von dem Ozon-Generator (3) umfassten Reflektors (33) um den Faktor 1,5 bis 2,5 zur Erhöhung der Intensität der reflektierten UV-Strahlung für die Ozonierung des Fluids (L) vergrößert ist und dass die gewellte Oberfläche des Reflektors (33) in Form von geraden Wellen mit gerundeten oder spitz zulaufenden Wellentälern und Wellenbergen ausgebildet ist.

8. Ozon-Generator gemäß mindestens einem der Ansprüche 1 bis 8, **dadurch gekennzeichnet, dass** die gewellte Oberfläche (4) der Innenwand des ersten Behälters (2) zum Reflektieren der UV-Strahlung Aluminium, insbesondere poliertes Aluminium, aufweist.

9. Ozon-Generator gemäß mindestens einem der Ansprüche 1 bis 9, **dadurch gekennzeichnet, dass** der Einlassöffnung des ersten Behälters (2) ein Luftfilter (6) in fluidmechanischer Verbindung zur Verwendung von Luft, insbesondere Umgebungsluft, als Fluid für die Ozonierung in dem ersten Behälter (2) vorgeschaltet ist.

10. Ozon-Generator gemäß mindestens einem der Ansprüche 1 bis 10, **dadurch gekennzeichnet, dass** für die Ansteuerung der oder jeder ersten UV-Strahlungsquelle (3) eine Ansteuereinheit (11) vorgesehen ist.

11. Verfahren zum Nachrüsten einer Anlage zur Aufbereitung von Wasser, aufweisend in fluidmechanischer Verbindung eine zweite Leitung (14) zum Bereitstellen des aufzubereitenden Wassers (W), einen UV-Reaktor (12) mit wenigstens einer zweiten Strahlungsquelle (13) zur Erzeugung einer zweiten UV-Strahlung für die physikalische Desinfektion des bereitgestellten aufzubereitenden Wassers und einer zweite Ansteuereinheit (17) zur Ansteuerung der oder jeder zweiten UV-Strahlungsquelle (13), eine dritte Leitung (15) zum Ableiten des in dem UV-Reaktor (12) physikalisch desinfizierten Wassers sowie ein Umwälzmittel (16) in der zweiten (14) oder dritten Leitung (15) zum Erzeugen eines Wasserflusses durch die zweite Leitung (14), den UV-Reaktor (12) und die dritte Leitung (15), **dadurch gekennzeichnet, dass** ein Ozon-Generator (1) gemäß mindestens einem der Ansprüche 1 bis 10 mit einem Behälter (2) zur Erzeugung von Ozon (O) durch Ozonierung eines durch den Behälter (2) hindurchgeleiteten Fluids (L) mittels einer ersten UV-Strahlung und mit einem Eintragsmittel (5) zum Eintrag des in dem Behälter (2) ozonierten Fluids (L+O) in das aufzubereitende Wasser (W) fluidmechanisch mit der zweiten (14) oder dritten Leitung (15) in einer Weise gekoppelt wird, dass das in dem Behälter (2) des Ozon-Generators (1) ozonierte Fluid (L+O) über das Eintragsmittel (5) des Ozon-Generators (1) gesteuert in den Wasserfluss für die chemische Desinfektion des aufzubereitenden Wassers (W) eingetragen wird.

12. Verfahren gemäß Anspruch 12, **dadurch gekennzeichnet, dass** die fluidmechanische Kopplung des Ozon-Generators (1) mit der zweiten (14) oder dritten Leitung (15) in einer Weise durchgeführt wird, dass zwischen der Kopplungsstelle und dem in Strömungsrichtung des aufzubereitenden Wassers (W) gelegenen Leitungsende eine freie Leitungslänge als wirksame Reaktionsstrecke von zumindest etwa 2,20 m, bevorzugt wenigstens etwa 2,30 m, zur oxidativen Aufbereitung des Wassers (W) unter Auflösung des Fluids (L) und des Ozons (O) sichergestellt wird.

13. Verfahren gemäß Anspruch 12, **dadurch gekennzeichnet, dass** die fluidmechanische Kopplung des Ozon-Generators (1) mit der zweiten (14) oder dritten Leitung (15) in einer Weise durchgeführt wird, dass zwischen der Kopplungsstelle und dem in Strömungsrichtung des aufzubereitenden Wassers (W) gelegenen Leitungsende in der zweiten (14) oder dritten Leitung (15) eine Mischvorrichtung (8) in Form einer Leitungsverlängerung oder eines Reaktionsfasses mit einer wirksamen Reaktionsstrecke von zumindest etwa 2,20 m, bevorzugt wenigstens etwa 2,30 m, zur oxidativen Aufbereitung des Wassers (W) unter Auflösung des Fluids (L) und des Ozons (O) in fluidmechanischer Verbindung eingebaut wird.

14. Verfahren gemäß mindestens einem der Ansprüche 12 bis 14, **dadurch gekennzeichnet, dass** als Ansteuereinheit (11) die vorhandene Ansteuereinheit zur gemeinsamen Ansteuerung jeder ersten (3) und jeder zweiten UV-Strahlungsquelle (13) verwendet wird.
